# EUROPEAN PATENT SPECIFICATION

(11) **EP 3 016 882 B1**
(45) Date of publication and mention of the grant of the patent: **11.09.2019**
(21) Application number: 14742424.6
(22) Date of filing: 01.07.2014
(51) Int. Cl.: B65D 75/58, A45D 19/00, B65D 75/48

(54) **METHOD OF IMPROVING RE-CLOSURE OF OXIDATIVE HAIR COLORANT SACHET WITH FOLDABLE RE-CLOSURE DEVICE**
VERFAHREN ZUM VERBESSERTEM WIEDERVERSCHLIESSEN EINES BEUTELS EINES OXIDATIVEN HAARFÄRBEMITTELS MIT FALTBARER WIEDERVERSCHLUSSVORRICHTUNG
PROCÉDÉ POUR AMÉLIORER LA REFERMETURE D'UN SACHET DE COLORANT OXYDATIF POUR CHEVEUX POURVU D'UN DISPOSITIF DE REFERMETURE PLIABLE

(30) Priority: 03.07.2013 US 201361842491 P
(43) Date of publication of application: 11.05.2016
(73) Proprietor: Noxell Corporation, Hunt Valley MD 21030-2098 (US)
(72) Inventor: KERR, George Scott, Cincinnati, Ohio 45202 (US); FINLEY, Alton Lloyd, III., Cincinnati, Ohio 45202 (US)
(74) Representative: Bandpay & Greuter
(86) International application number: PCT/US2014/044997
(87) International publication number: WO 2015/002920

(56) References cited:
- EP-A1- 2 612 825
- WO-A1-2013/103625
- US-A- 2 333 587
- US-A- 3 278 085
- US-A- 5 228 782
- US-A1- 2008 056 623
- US-A1- 2011 075 954

## Description

### FIELD OF THE INVENTION

The present invention relates to a method of maintaining chemical reactivity of an oxidative hair colorant in an opened flexible sachet, which is stored for some time. The reason to store such an opened sachet is that prior to use of an oxidative hair color the ingredients need to be tested to ensure they have no adverse reaction by users. This is often done by using a small amount of the product for a skin test, which requires opening of the sachet, and extracting a small sample for the skin test. It is of course important to ensure that the sachet is closed again after extracting the sample to prevent premature oxidation. The quality of this re-closure will strongly influence how the hair colorant will perform when using it as intended. The method according to the present invention ensures maintaining chemical reactivity by improving the quality of the re-closure by intuitively inducing safe and tight re-closure by users of such hair colorant. This is achieved by providing the sachet to the user in a configuration already in its re-closure position, while the sachet has not been opened yet.

### BACKGROUND OF THE INVENTION

Colorant products for oxidative dyeing of hair are often provided using a package kit comprising an oxidative hair dye component and a developer component with an oxidizing agent. The hair dye component is often in the form of a cream and stored in an aluminum tube and the developer component is often provided in a plastic bottle. To obtain a ready to use hair color product, the hair dye component is dispensed into the bottle containing the developer component. Both are blended in the bottle before applying to the hair. Alternatively the components are poured together into a bowl and blended.

The hair dye component is relatively reactive to oxidation. The sachet must be resistant to chemicals and must exhibit excellent barrier properties especially against oxygen from air. Aluminum tubes meet these requirements and often have the benefit of being re-closable when being provided with a screw cap. However recently sachets have become available being made of material with the desired barrier properties and resistance to chemicals, while being significantly less expensive, able to be filled with exactly a single usage dose/quantity and allowing complete emptying, and having a much smaller ecological footprint.

One of the remaining drawbacks of sachets was lack of convenient re-closure. This has also recently been addressed by providing sachets with a pouring spout, defined as a narrowed region relative to the main reservoir. This allows creating only a small opening for extracting hair dye component from the sachet by tearing off the tip of the pouring spout. A small opening has the benefit of easier handling when pouring from the spout, less exposure to entry of oxygen from the air through the opening versus a larger opening. In addition, the spout can be made such that it comprises a closure element. The closure element provides the pouring spout region of the sachet with a stiffness allowing the sachet material to maintain its configuration such that once it is folded onto itself it remains in this position. If folded tightly onto itself the fold of the pouring spout then prevents oxygen (respectively air) from entering the sachet. Of course, this is only achieved if the user creates the fold properly after first opening.

Therefore, there is a need for providing such an improved re-closable sachet for a hair dye component in a way, which ensures for one that users of such a hair dye component actually reclose the sachet. But also that the re-closure is of a quality that the remaining amount of hair dye component in the sachet remains available for oxidative hair coloring by preventing oxygen/air from entering through the sachet opening.

US 2 333 587 A relates to a package for small articles such as tablets, pills or buttons, or powdered or granulated material, or liquid or paste, the package comprising a bag having an initially open, or a sealed, end, and a fold extending entirely across it inwardly of said end so that when the bag is folded it is closed, and when it is unfolded it is open.

### SUMMARY OF THE INVENTION

The present invention relates to a method of maintaining chemical reactivity of an oxidative hair dye component while being stored in an opened flexible sachet by increasing the user compliance with the re-closure step of a usage regime of said oxidative hair dye component. This is achieved by providing a sachet where it is folded into its re-closure configuration already as provided before opening the sachet. This causes the user to unfold the sachet from its folded re-closure position into an extended position to facilitate opening and extracting some oxidative hair dye component from the sachet before folding the sachet back into its re-closed configuration. This provides the user with an experience of the re-closed position of the sachet, guidance that re-closure is possible and desired and guidance how to achieve this properly by having to undo it.

### DETAILED DESCRIPTION OF THE INVENTION

The method according to the present invention is particularly developed for situations where a small amount of oxidizing hair dye component is taken out of the sachet and the remainder of the hair dye component needs to be safely stored for some additional time. Of course this may happen e.g. when short hair is colored and the quantity of hair dye component in a sachet is sufficient for multiple applications, such that after one coloring a second coloring is planned at a later time and the sachet needs to be properly closed until a second application. There is also a usage regime according to which sensitivity to the hair dye component needs to be assessed sufficiently prior to full hair coloring using the hair dye, hence this is another required intermediate storage in an open sachet of the hair dye component after opening of the sachet. Such storage in an open sachet may result in oxidized hair dye component due to exposure to air (respectively the oxygen in air). The problem with such oxidized component is that it will no longer be available for coloring hair; it may dilute the available amount of hair color and cause fainting of the intended color result; also such oxidized hair dye may result in off-colorations due to undesired reactions.

The usage regime mentioned above comprises evaluating suitability to use an oxidative hair dye component for coloring the hair of a person without causing an unacceptable skin reaction. This is done by opening the sachet and extracting a minor amount of the oxidative hair dye component from the opened sachet and then applying the oxidative hair dye component to the skin of the person, usually to the skin on the underarm of the person. The minor amount of oxidative hair dye component typically should be less than 20%, preferably less than 10%, more preferably less than 7,5% and most preferably 5% or less by weight of the total amount of oxidative hair dye component in the sachet prior to opening the sachet.

After extracting some oxidative hair dye component, it is necessary to close the sachet to prevent oxidation reaction of the hair dye component due to exposure to air oxygen through the opening. The oxidative hair dye component remains on the skin for a predetermined amount of exposure time and is removed afterwards. After a reaction time the skin is visually inspected in the area where the oxidative hair dye component had been applied and it is decided whether the oxidative hair dye component is causing an unacceptable skin reaction or not. Provided no unacceptable skin reaction is caused conventional hair coloring using the oxidative hair dye component can progress. The exposure time is at least as long as the recommended usage time of the oxidative hair dye component and in absolute terms at least 10 minutes, preferably at least 20 minutes, more preferably at least 30 minutes. The reaction time in this regime is at least 12 hours, preferably at least 18 hours, more preferably at least 24 hours. In general this time should be sufficient to be confident in light of the components used in the hair dye component that no undesirable skin reactions develop.

The method according to the present invention comprises hence two basic steps. In a first step a oxidative hair dye component in a flexible sachet is provided. The sachet has a pouring spout with a re-closure element with stiffness greater than the stiffness of the sachet. Thereby it provides capability of re-closing by folding a portion of the pouring spout onto itself and the re-closure element is keeping the folded pouring spout substantially in its folded configuration thereby reducing or preventing premature oxidation of the oxidative hair dye component in the sachet after opening. According to the invention the pouring spout is provided with the re-closure element in a configuration where it is folded onto itself into a re-closed position not just after but already prior to opening the sachet.

In a second step the re-closure element is unfolded by a user from its folded re-closure position into an extended position before opening and subsequently allows opening and extracting the oxidative hair dye component from the sachet for the skin test. This provides the person with an experience of the re-closed position of the sachet and guidance how to achieve this properly by having to undo it. This in term increases compliance and accuracy with the re-closure requirement.

In a third subsequent step the sachet is reclosed with the re-closure element by folding it onto itself into a re-closed position substantially or exactly as it was provided prior to opening said sachet.

A sachet for an oxidative hair dye component according to the invention comprises a reservoir with an internal volume and a pouring spout on the upper side of the reservoir for dispensing, i.e. discharging the hair dye component stored in the reservoir. The pouring spout is preferably not attached but integrally formed with the reservoir and projects with an elongated shape from an upper edge, i.e. upper side of the reservoir. The width of the pouring spout is smaller than the width of the reservoir, whereby the pouring spout can be inserted into a bottleneck of a bottle as second package in a hair coloring kit. An inner flow channel of the pouring spout is in fluid communication with the internal volume of the reservoir.

In order to provide a tight seal prior to usage of the hair dye component a removable tear tab is placed at the dispensing end of the pouring spout.

As the width of the pouring spout is relatively small, a hair dye sachet with a relatively short tear distance is provided, so that the fingers of the user stay in control during the opening action, i.e. when the tear tab is being removed. In order to remove the tear tab the fingers of one hand rest below the dispensing end of the pouring spout, while the fingers of the other hand remove the tear tab.

The hair dye sachet is made of a laminate structure resulting in the flexibility characteristics of the sachet. The laminate structure is chemically resistant to the hair dye component, i.e. the laminate is compatible with the component provided in the sachet. The sachet may be designed as a flat and reclined, i.e. pillow-type pouch, which is easy to store or as an upstanding pouch, i.e. with an upright configuration comprising a base for supporting the sachet in the upright position. A sachet with an upright position is advantageous to handle, in particular, it can be set aside once the tear tab is removed without leakage of the hair dye component.

The sachet may be made of one piece of a flexible laminate folded at one longitudinal edge and joined, i.e. sealed together at the remaining open edges and, thereby, providing a so-called "three-sided seal".

However, the laminate may also be folded at the two opposite longitudinal edges and sealed at the backside of the sachet and, thus, providing a so-called "fin-seal". The usage of one piece of laminate which is folded at least at one outer longitudinal edge results in a reduction of laminate-material during the production process of the sachet.

However, a sachet with a "fin-seal" is preferred as the capacity of the sachet relative to its width is increased. Further, as the longitudinal edges can be inflated more easily during the filling process, the filling speed of the hair dye compound into the sachet can be increased, as well.

However, the flexible sachet may also be made of two pieces of flexible laminate, which are stacked upon each other and joined, i.e. sealed, at their outer circumference.

With respect to the reservoir, the pouring spout may be positioned symmetrically, i.e. in the centre, or may be positioned asymmetrically. Preferably, the pouring spout is aligned with an outer longitudinal edge of the reservoir that is folded along said edge.

Generally, the spout, i.e. the width of the spout, comprises a sealing portion and a flow channel portion. A symmetric, i.e. centric spout comprises two sealing portions and one flow channel portion, whereas a spout being aligned with the outer longitudinal edge comprises only one sealing portion and one flow channel portion as the sealing function on the remaining side is provided by the folded edge of the laminate. In order to maximize the flow channel relative to a given spout diameter, a spout aligned with the outer edge is preferred, as it allows a wider flow channel and subsequently an easier dispensing/discharging experience.

The hair dye sachet of the present invention is easy to handle and has decreased weight as compared to aluminum tubes. It requires, inter alia, less material as well as reduced amounts of energy for manufacturing and transportation and, thus, meets sustainability and cost-reduction requirements by leaving a reduced ecological footprint vs. conventional aluminum tube packaging .

The pouring spout comprises at least one re-sealing element for reclosing the dispensing end once the tear tab has been removed.

It is advantageous to provide a reclosing feature in view of the requirement to conduct a skin test 24 hours before applying the ready to use hair color product to the hair. In order to conduct a skin test, the consumer removes a certain amount of the hair dye component out of the sachet and applies it to the skin in order to examine if skin irritation occurs. In addition, some consumers prefer not to use the hair dye component in a single dose, but rather in a split dose, i.e. multi dose, e.g. for hairline dyeing. After conducting the skin test or after removing a certain amount of the hair dye component for other purposes, the consumer is able to reclose the sachet in order to store the content in a safe manner. Further, exposure of the hair dye component to air, and in particular to oxygen, is limited, thereby protecting the content of the sachet from oxidation.

The re-sealing element for reclosing the dispensing end has a stiffness that is greater than the stiffness of the laminate structure. The term "stiffness" is defined as the rigidity of the re-sealing element, i.e. the extent to which the pouring spout resists deformation in response to an applied force. In other words, the stiffness is a measure of the resistance offered by the pouring spout to deformation. The rigidity of the re-sealing element provides a tight and secure closure - once the pouring spout is re-closed. Alternative mechanical means like snap and seal means or hook and loop means can provide maintenance of the re-closed configuration.

The re-sealing element may be integrally formed with or may be attached to the hair dye sachet. The stiffness re-sealing element extends at least partially along the length of the pouring spout and crosses a folding line along which the pouring spout can be folded and flapped towards the reservoir. Further, the re-sealing element may also cross over to the reservoir, i.e. extend at least partially along the length of the reservoir.

Preferably, the pouring spout is re-closable by folding the pouring spout toward the outer surface of the reservoir. Due to increased stiffness/rigidity of the re-sealing element compared to the flexibility of the laminate structure, the pouring spout stays in contact with the outer surface of the reservoir and does not flex back. In other words, the rigidity/tension of the re-sealing element keeps the pouring spout in the folded up position. Once the hair dye sachet is reclosed, the inner flow channel of the pouring spout is substantially blocked, thereby preventing spillage of the hair dye component and entry of oxygen 8respectively air) in the opposite direction.

Preferably, the width of the reservoir is 40 % to 60 %, more preferably between 47 % and 53% of its height and further preferably, the width of the elongated shape of the pouring spout is 40% to 100 %, more preferably of 75 % of the pouring spout height.

In particular, the reservoir may have a width of 40 mm to 90 mm, preferably 45 mm and 60 mm and more preferably 50 mm and 54 mm. The reservoir height is preferably from 110 mm to 160 mm, preferably from 116 mm and 130 mm. The pouring spout may have a width of 15 mm to 25 mm and a height of 15 mm to 30 mm. More preferably, the external width of the pouring spout is 16 mm and the internal width of the spout, i.e. of the width of the flow channel is 14 mm.

The re-sealing element may be a metal strip, plastic strip, band, adhesive clamp, wire tie, rigid non-permanent adhesive bonding tab and/or an additional rigid layer attached to or inserted in the laminate structure. In the alternative hook and loop means or snap and seal means, both providing mechanical attachments to maintain a re-closure position, can be provided.

In case the re-sealing element is an adhesive clamp it comprises a tape having one side of the tape coated with an adhesive substance and a clamping strip of foldable non-elastic material attached to the adhesive side of the tape. The other side of the tape is attached to the outer surface of the pouring spout. Preferably, the tape is wider and longer than the clamping strip in order to seal a puncture of the laminate structure by an edge of the clamping strip. Preferably, the tape and/or the adhesive substance may be transparent so that printings on the outer surface of the pouring spout are visible. Preferably, the adhesive clamp may comprise a printed area over the tape at the area of the clamping strip. Preferably, the print comprises at least one folding mark indicating the folding line along which the pouring spout should be folded. Preferably, the printed area is non-transparent, and further preferably, slightly larger than the clamping strip to cover and hide the clamping strip when viewed from the side of the adhesive clamp.

In case the re-sealing element is a wire tie, the wire tie is preferably attached to the outer surface of the pouring spout and extends downwards to and along a specific distance on the outer surface of the reservoir. Once the tear tab has been removed and the sachet has to be reclosed, the pouring spout can be folded along the folding line and flapped towards the reservoir. The tension of the wire tie keeps the pouring spout in the folded up position.

In case the re-sealing element is an additional rigid layer inserted in the laminate structure would provide a re-sealing element which is not visible to the consumer.

According to an embodiment, the tear tab is integrally formed with the pouring spout.

Preferably, the tear tab is aligned with an outer edge of the pouring spout and extends in orthogonal direction to the outer edge of the pouring spout.

This embodiment provides an ergonomic design, which enables the user to open the sachet in a facile manner. The sachet exhibits an asymmetric shape and is preferably made of one piece of a flexible laminate folded along one longitudinal edge, the fold forming an alignment of the reservoir, spout and tear tab. In other words, the longitudinal edge forming the alignment has no joint, which would decrease the width of the inner flow channel with respect to a given width of the spout.

According to an embodiment, the hair dye sachet comprises a pre-defined tearing line between the tear tab and the dispensing end of the pouring spout along which the tear tab is teared when the sachet is opened.

In order to facilitate opening of the sachet, i.e. in order to reduce the force required for tearing, a tearing aid may be provided at the dispensing end. Such aid can be selected from tear notch, perforations, laser scoring/cut for tear guidance, orientation of individual material layers, e.g. use of easy tear films such as a polyethylene sealing layer, or use of aluminum as a guidance material, for example. This allows for an easy initiation as well as good control of the tear direction during opening. A tear notch, e.g. in form of a simple cut, triangular cut or semi circular cut creates a focus point for the applied force of the user and facilitates initiation of the tear procedure.

However, design of the sachet allows for the use of accessories such as scissors, blades or knifes may be used for opening, as well. Accordingly, cutting through the laminate structure of the sachet also results in defined edges.

According to an embodiment the pouring spout comprises at its inner perimeter at least one flow restrictor for restricting the flow of the hair dye component when the component dispenses.

Preferably, the flow restrictor may be provided in case the hair dye component stored in the reservoir has low viscosity, such as liquid hair dye components. By means of a flow restrictor the width of the inner flow channel is narrowed, thus, leading to spill prevention during the opening action as well as to a limited flow rate of the hair dye component when it dispenses. The pouring spout is still adapted to the opening of a second package while providing a flow restriction leading to a mess-free dispensing. In other words, by means of a flow restrictor the same flow velocity can be provided for hair dye compounds with different viscosities.

The flow restrictor may have the shape of a recess, indentation, notch or bulge, for instance. The shape, i.e. geometry of the flow restrictor is adapted to the desired flow velocity of the hair dye compound. The flow restrictor is easy to integrate into the pouring spout. Preferably, the flow restrictor may be provided by means of removable and exchangeable sealing bars integrated in the manufacturing tools.

According to an embodiment, the at least one flow restrictor is formed as a bulge projecting inside the pouring spout.

Such a bulge projects inside the inner flow channel, thereby limiting the flow-through passage within the pouring spout.

According to an embodiment, at least two bulges are formed in a staggered arrangement.

The staggered arrangement of the at least two bulges further limits the flow rate of the hair dye component. The bulges may be arranged in an overlapping or in a non-overlapping manner. An overlapping arrangement provides a further limitation of the flow rate.

### BRIEF DESCRIPTION OF THE DRAWINGS

The method of the invention uses a sachet of a specific design which is described in more detail below with reference to illustrative embodiments, wherein:
Fig. 1 shows a back view of an embodiment of the hair colorant container;
Fig. 2 shows a front view of a hair colorant container with a snap and seal closure;
Fig. 3 shows the front view of another embodiment of the hair colorant container with a wire tie as a re-sealing element;
Fig. 4 shows the front view of another hair colorant container with a hook and loop tape closure; and
Fig. 5 shows another embodiment of the hair colorant container with a flow restrictor.

### DETAILED DESCRIPTION OF THE SACHET ACCORDING TO THE INVENTION AS SHOWN IN THE EMBODIMENTS OF THE DRAWINGS

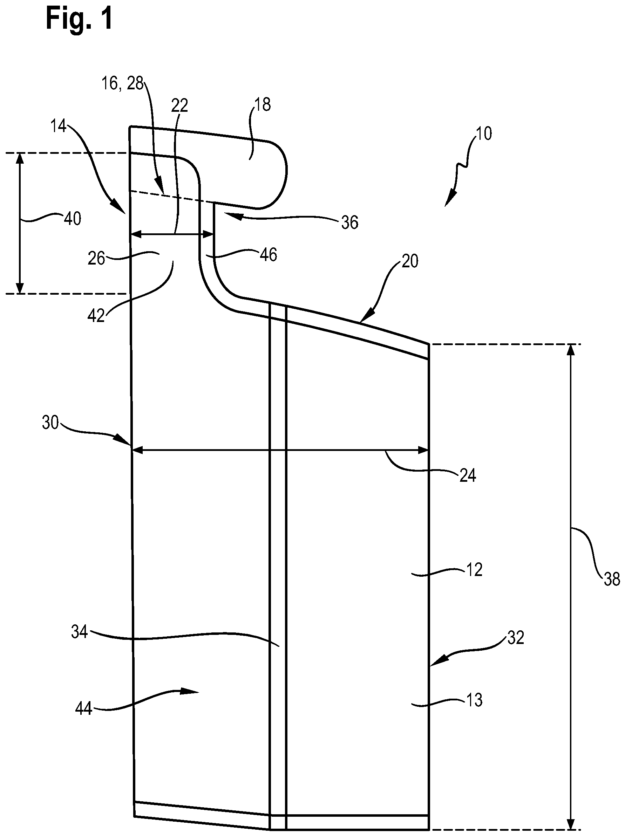

Fig. 1 shows a container for a hair colorant component 10 in the form of a flexible sachet 10 for storing a hair dye component or a developer component. The sachet 10 comprises a reservoir 12 with an internal volume 13, a pouring spout 14 being in fluid communication with the internal volume 13 and having a dispensing end 16 and a removable tear tab 18. The tear tab 18 is attached at the dispensing end 16 for sealing the sachet 10 before the sachet 10 has been opened.

The pouring spout 14 and the tear tab 18 are integrally formed with the reservoir 12 and are aligned at one outer longitudinal edge 30 of the reservoir 12. The pouring spout 14 projects from an upper side 20 of the reservoir 10 and has an elongated shape with a width 22 being smaller than the width 24 of the reservoir 10. The tear tab 18 is placed at the dispensing end 16 in a perpendicular manner with respect to the pouring spout 14.

Further, the pouring spout 14 comprises a grip zone 26 which extends substantially along the width 22 of the spout 14 and is adapted with its dimensions to the fingers of a user. Thus, the user is enabled to open the sachet 10 in an easy manner by clamping the sachet 10 in the region of the pouring spout 14, namely at the grip zone 26 and thereby providing a spill prevention. By clamping the pouring spout 14, the fingers of the user act as a temporary valve element. Opposite walls of the spout 14 are pressed together thereby substantially preventing the hair dye component from spilling out of the reservoir 12 when the tear tab 18 is being removed.

After opening the sachet 10, the hair dye component can be dispensed which usually is into a second package, like a bottle, comprising the respective other hair colorant component (oxidizing component or hair dye component, respectively) to provide a ready to use mixed hair color product.

In order to facilitate the removal of the tear tab 18, a pre-defined tearing line 28 between the tear tab 18 and the dispensing end 16 of the pouring spout 14 is provided. The pre-defined tearing line 28 may be provided by means of a tear notch, perforations, laser scoring/cut for tear guidance, specific orientation of individual material layers, e.g. the use of easy tear films, such as a polyethylene layer, or the use of aluminum as a guidance material, for example. This allows an easy tear initiation as well as a controlled tear direction. The sachet 10 according to Fig. 1 shows a tear notch 36, which creates a focus point for the applied force of the user and makes it easier to initiate the tear.

The width 24 of the reservoir 12 is 65 mm and the height 38 of the reservoir 12 is 110 mm, whereas the pouring spout 14 has a width 22 of 16 mm and a height 40 of 30 mm. The internal width of the spout 14, i.e. of the flow channel 42 is 14 mm. Thus, on the one hand the internal flow channel 42 of the pouring spout 14 is as wide as possible to enable easy and fast dispensing. On the other hand, the spout width 22 is in line with the opening diameter of a second package e.g. a bottle having a defined standard internal neck diameter of 17 mm in which the spout 14 can be inserted to dispense the content of the sachet.

The outer perimeter of the pouring spout 14 has a profile that expands to an oval shape when opened. Thus, a defined section of the outer wall of the spout 14 does not lie completely against the inner wall of the second package opening e.g. a bottleneck, but leaves a passage open through which air may be released from the inside of the bottle during dispensing/discharging the sachet content. Therefore, a fast, complete and mess free dispensing is achieved.

When the spout 14 gets inserted into the bottleneck in a most flat condition the angled tear notch cut 36 ensures that the top end of the spout 14 has a width 22 which is narrower than the internal bottleneck diameter. The angled notch 36 allows an easy insertion of the spout 14. Through the docking action, the spout 14 gets pushed against the inner wall of the bottleneck and facilitates the opening of the spout.

The sachet 10 is made of a flexible laminate structure 44 which comprises at least three layers, preferably four layers. The laminate 44 of the present embodiment has a thickness of 100 µm to 150 µm and comprises four layers.

The first layer facing the inner volume 13 of the sachet 10 is a polyethylene layer and has a thickness of 70 µm to 100 µm. The first layer is produced by means of an extrusion foaming process.

The second layer following the first layer has a thickness of 18 µm to 25 µm and comprises polyethylene and ethylene methacrylic acid polymer or polyethylene and ethylene methacrylic acid polymer.

The third layer is made of aluminum and acts as a barrier layer. The aluminum layer has a thickness of 9 µm.

The first, the second and the third layer are joined together by means of extrusion lamination. Such a laminate structure 44 results in sufficient chemical and mechanical stress resistance.

The fourth layer is made of polyamide with a thickness of 5 µm or of polyethylenterephthalat with a thickness of 12 µm. The fourth layer comprises a printing applied on the surface facing the aluminium layer and is joined to the third layer by means of adhesive lamination.

The laminate structure 44 of the present embodiment shows substantially no corrosion and/or migration of particles of hair dye component, like dye pigments, surfactants and aqueous ammonia solution.

The laminate 44 is folded at the two opposite longitudinal edges 30, 32 of the sachet 10 and sealed at the backside and provide a so-called "fin-seal" 34. As the pouring spout 14 is aligned with the outer longitudinal edge 30 of the reservoir 12, the spout 14 comprises one sealing portion 46 and one flow channel portion 42 as the sealing function on the remaining side 30 is provided by the folded edge of the laminate 44. Such a design results in a maximized flow channel 42 relative to a given spout width.

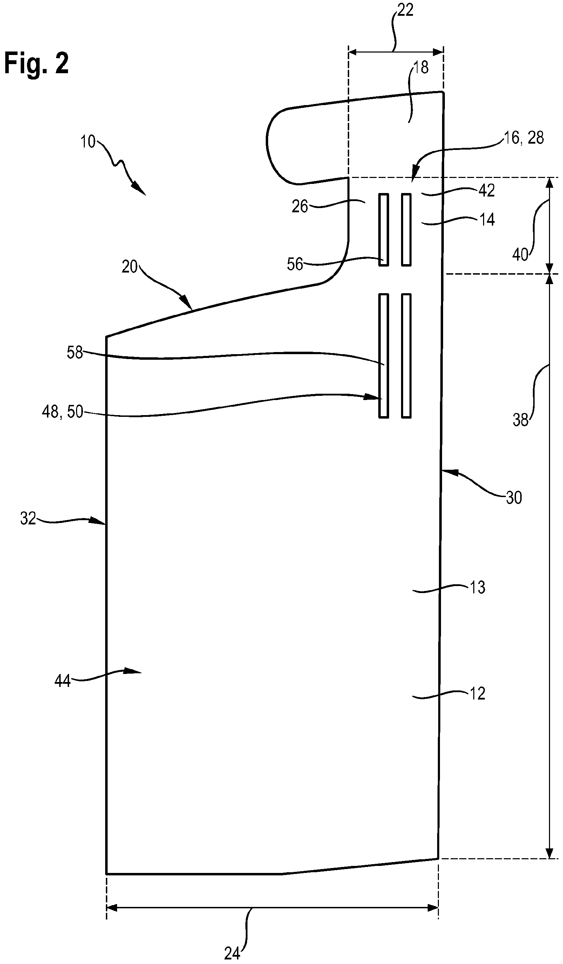

The sachet for a hair dye components 10 shown in Fig. 2 comprise a re-sealing element 48, respectively, for reclosing the dispensing end 16 of the pouring spout 14 once the tear tab 18 has been removed. The pouring spout 14 is re-closable by folding and fixing the pouring spout 14 at the outer surface of the reservoir 12 by means of the re-sealing element 48. Once the sachet for a hair dye component 10 is re-closed, the inner flow channel 42 of the pouring spout 14 is substantially blocked, thereby preventing spillage of the hair dye component or entry of air, respectively oxygen.

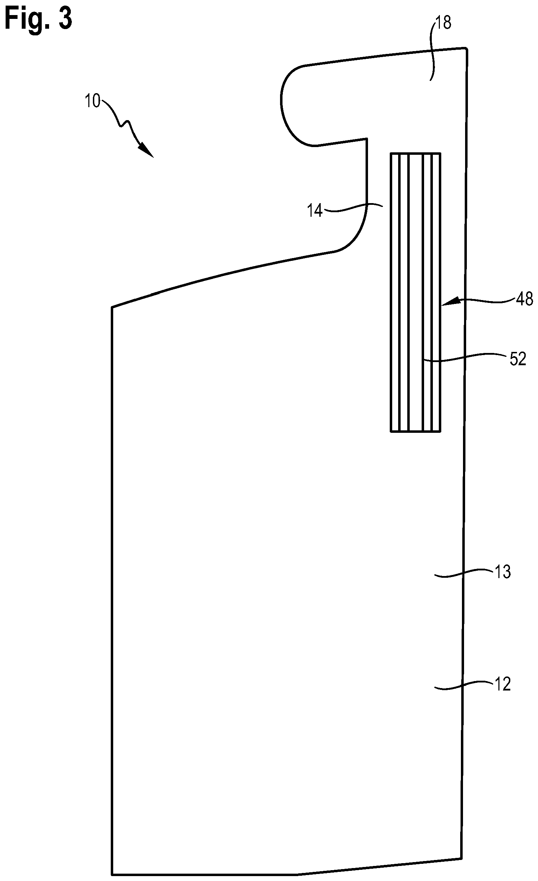

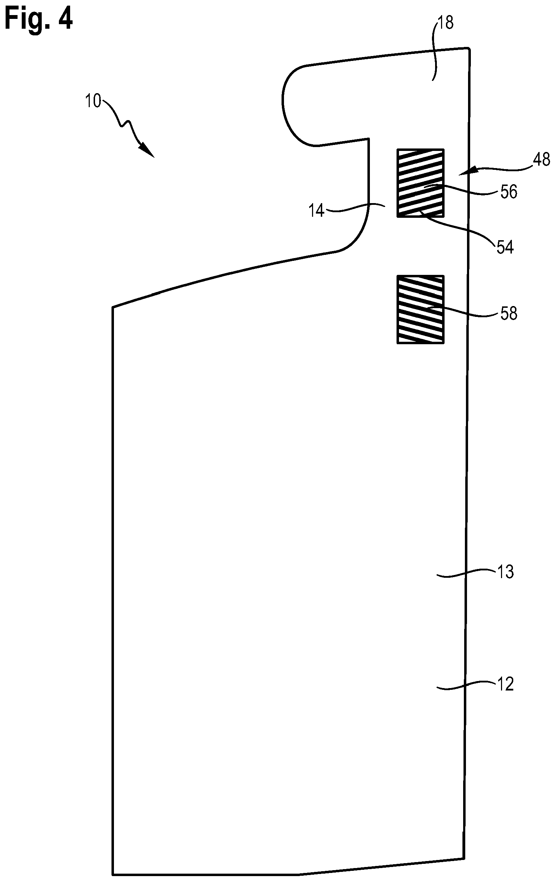

The re-sealing element 48 shown in Fig. 2 is a snap and seal closure 50, whereas the re-sealing element 48 shown in Fig. 3 is a wire tie 52 and the re-sealing element 48 shown in Fig. 4 is a hook and loop tape closure 54.

According to Fig. 3, the wire tie 52 is attached at the outer surface of the pouring spout 14 and extends downwards to and along a specific distance on the outer surface of the reservoir 12. Once the tear tab 18 has been removed and the sachet 10 has to be reclosed, the pouring spout 14 can be folded along a folding line and flapped towards the reservoir 12. The tension/rigidity of the wire tie 52 keeps the pouring spout 14 in the folded position providing proper re-closure.

The hook and loop tape closure 54 (cp. Fig. 4) and the snap and seal closure 50 (cp. Fig. 2) consist of two elements 56, 58, namely of a male 56 and a female element 58, wherein one of the elements 56, 58 is attached at the outer surface of the pouring spout 14 and the other one is attached at the outer surface of the reservoir 12, respectively. In order to reclose the sachet 10, the pouring spout 14 is folded along the folding line and is secured at the reservoir 12. The male and female elements 56, 58 engage and keep the pouring spout 14 in the folded position.

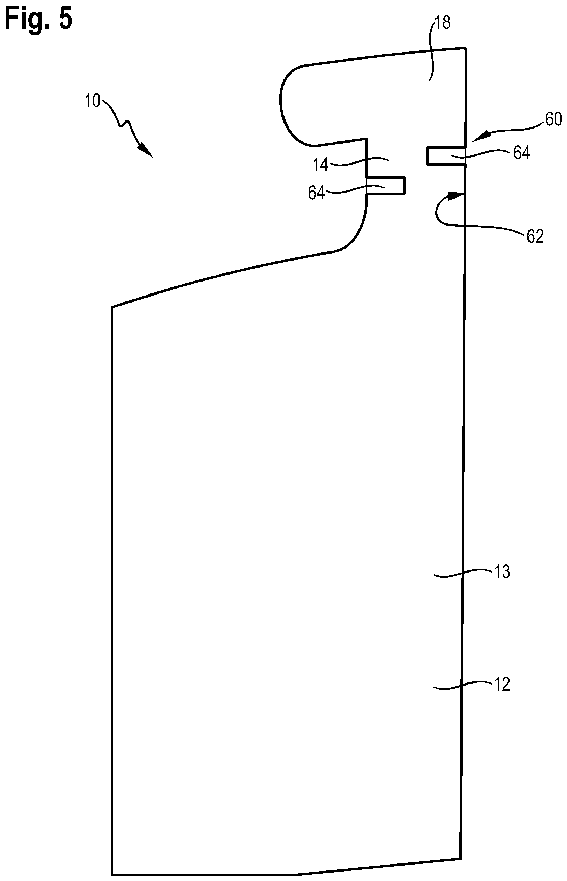

Fig. 5 shows a sachet for a hair dye component 10 comprising a flow restrictor 60 at the inner perimeter 62 of the pouring spout 14. The flow restrictor 60 is provided in case the hair dye component stored in the reservoir 12 has a low viscosity, such as liquid hair dye components. By means of the flow restrictor 60 the width of the inner flow channel 42 is narrowed, thus, leading to spill prevention during the opening action as well as to a limited flow rate of the hair dye component when it dispenses. The flow restrictor 60 has the shape of two bulges 64 projecting inside the pouring spout 14 in a staggered manner.

### COMPARISION EXPERIMENTS

A hair dye sachet according to Fig. 3 was provided to users who were asked to start to perform a skin test. Some were given the sachet with the pouring spout already folded onto itself while others received it unfolded. In discussions amongst these individuals after the initial steps of the skin test it became clearly stated that having the pre-folded configuration increases the user's urge to unfold the sachet and that draws attention to the spout area. In some comment, it was expressed that it is very hard for users to make the connection how to use the re-closure mechanism without being shown and that having to unfold it prior to opening was providing just the right re-closure indication.

It was consensus that the key benefit for having the spout folded down prior to opening is to have an idea registered in users minds that sachet needs to be folded down to reclose it. All users confirmed that this would intuitively strengthen their compliance with the re-closure requirement and ensure accuracy of tight closure thus providing an improved hair coloring result.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### List of reference signs:

- 10: sachet for a hair dye component
- 12: reservoir
- 13: internal volume
- 14: pouring spout
- 16: dispensing end
- 18: removable tear tab
- 20: upper side of the reservoir
- 22: width of the spout
- 24: width of the reservoir
- 26: grip zone
- 28: pre-defined tearing line
- 30: outer longitudinal edge
- 32: other outer longitudinal edge
- 34: fin seal
- 36: tear notch
- 38: height of the reservoir
- 40: height of the pouring spout
- 42: flow channel
- 44: laminate
- 46: sealing portion of the spout
- 48: re-sealing element
- 50: snap and seal closure
- 52: wire tie
- 54: hook and loop tape closure
- 56: male element
- 58: female element
- 60: flow restrictor
- 62: inner perimeter of the pouring spout
- 64: bulges

## Claims

1. Method of maintaining chemical reactivity of an oxidative hair dye component while being stored in an opened flexible sachet (10) by increasing the user compliance with the re-closure step of a usage regime of said oxidative hair dye component, said regime comprising the steps of
a. evaluating suitability to use said oxidative hair dye component for coloring the hair of a person without causing an unacceptable skin reaction by opening said flexible sachet and extracting a minor amount of said oxidative hair dye component from the opened flexible sachet for applying said minor amount of oxidative hair dye component to the skin of said person,
b. closing said sachet to prevent oxidation reaction of said oxidative hair dye component due to exposure to air oxygen through said opening,
c. allowing said oxidative hair dye component to remain on said skin of said person for a predetermined amount of exposure time and removing the oxidative hair dye component from said skin,
d. after a predetermined reaction time visually inspecting the skin of said person where said oxidative hair dye component had been applied and deciding whether said oxidative hair dye component is causing an unacceptable skin reaction or not
e. using said oxidative hair dye component to color the hair of said person, provided no unacceptable skin reaction was caused by said oxidative hair dye component,
said method comprising the steps of
I) providing said oxidative hair dye component in said flexible sachet (10), said flexible sachet (10) having a laminate structure (44) for storing said oxidative hair dye component and said sachet (10) comprising:
- a reservoir (12) with an internal volume (13) for storing said oxidative hair dye component, having a reservoir height (38) and a reservoir width (24),
- a pouring spout (14) being in fluid communication with the internal volume (13) and having a dispensing end (16) for dispensing said oxidative hair dye component,
- the pouring spout (14) projecting from an upper side (20) of the reservoir (12) and having an elongated shape with a width (22) being smaller than the width (24) of the reservoir (12),
- a removable tear tab (18) at the dispensing end (16), said tab (18) sealing the sachet (10) prior to opening said sachet (10),
- the pouring spout (14) comprises are-closure element (48) for reclosing the dispensing end (16) once the tear tab (18) has been removed, the re-closure element (48) provides capability of reclosing by folding a portion of said pouring spout (14) onto itself and said re-closure element (48) essentially keeps said folded pouring spout (14) in said folded position either by having a stiffness being greater than the stiffness of the laminate structure (44) or by mechanical snap and seal means or by mechanical hook and loop means and the re-closure element (48) thereby reducing or preventing premature oxidation of said oxidative hair dye component in said sachet after opening,
- said pouring spout (14) being folded onto itself into a re-closed position already as provided prior to opening said sachet (10),
II) unfolding said re-closure element (48) from said folded re-closure position into an extended position for opening and extracting said amount of said oxidative hair dye component from said sachet (10), thereby providing experiential guidance on the re-closed position of said sachet and thereby increasing compliance with the re-closure requirement,
wherein said exposure time is at least as long as the recommended usage time of said oxidative hair dye component.

2. The method according to claim 1, having a third subsequent step
III) reclosing said sachet with the re-closure element by folding it onto itself into a re-closed position as it was provided prior to opening said sachet.

3. The method according to any preceding claim,
wherein the re-closure element (48) comprises a metal strip, plastic strip, band, and/or an additional rigid layer attached to or inserted in the laminate structure, preferably a wire tie (52).

4. The method according to claim 1 or 2,
wherein said exposure time is at least 10 minutes preferably at least 20 minutes, more preferably at least 30 minutes.

5. The method according to any preceding claim,
wherein the reaction time is at least 12 hours, preferably at least 18 hours, more preferably at least 24 hours.

6. The method according to any preceding claim,
wherein the minor amount of said oxidative hair colorant is less than 20%, preferably less than 10%, more preferably less than 7,5% and most preferably 5% or less by weight of the total amount of said oxidative hair dye component in said sachet prior to opening said sachet.

7. The method according to any preceding claim
wherein the pouring spout (14) is integrally formed with the reservoir (12).

8. The method according to any preceding claim
wherein the tear tab (18) is integrally formed with the pouring spout (14).

9. The method according to any preceding claim
wherein the flexible sachet (10) comprises a pre-defined tearing line (28) between the tear tab (18) and the dispensing end (16) of the pouring spout (14) along which the tear tab (18) is torn when the sachet (10) is opened, preferably the tear tab is completely torn off from said sachet.

10. The method according to any preceding claim,
wherein the pouring spout (14) comprises at its inner perimeter (62) at least one flow restrictor (60) for restricting the flow of said hair dye component when it dispenses.

11. The method according to claim 9,
wherein the at least one flow restrictor (60) is formed as a bulge (64) projecting inside the pouring spout (14).

12. The method according to any preceding claim,
wherein the reservoir width is from 40% to 60 %, more preferably from 47 %to 53% of the reservoir height.

13. The method according to any preceding claim,
wherein the reservoir height is between 110 and 160mm.

14. The method according to any preceding claim,
wherein the reservoir width is between 45 and 60 mm, preferably between 50 and 54 mm.

15. The method according to any preceding claim,
wherein the width of said pouring spout (14) is 50% or less, preferably 40% or less, more preferably 30% or less of the width of said reservoir (12).

## Patentansprüche

1. Verfahren zur Aufrechterhaltung der chemischen Reaktivität einer oxidativen Haarfärbekomponente während ihrer Lagerung in einem geöffneten biegsamen Beutel (10) durch das Erhöhen der Einhaltung des Wiederverschlussschritts von Gebrauchsbedingungen der oxidativen Haarfärbekomponente durch Benutzer, wobei die Bedingungen die Schritte
a. des Beurteilens der Eignung zur Verwendung der oxidativen Haarfärbekomponente zum Färben des Haars einer Person ohne das Verursachen einer inakzeptablen Hautreaktion durch das Öffnen des biegsamen Beutels und das Entnehmen einer kleineren Menge der oxidativen Haarfärbekomponente aus dem geöffneten biegsamen Beutel, um die kleinere Menge der oxidativen Haarfärbekomponente auf die Haut der Person aufzutragen,
b. des Verschließens des Beutels, um eine Oxidationsreaktion der oxidativen Haarfärbekomponente aufgrund einer Exposition gegenüber Luftsauerstoff durch das Öffnen zu verhindern,
c. des Zulassens des Verbleibens der oxidativen Haarfärbekomponente auf der Haut der Person für einen vorbestimmten Expositionszeitraum und des Entfernens der oxidativen Haarfärbekomponente von der Haut,
d. nach einer vorbestimmten Reaktionszeit der Durchführung einer Sichtprüfung der Haut der Person dort, wo die oxidative Haarfärbekomponente aufgetragen worden ist, und des Entscheidens, ob die oxidative Haarfärbekomponente eine inakzeptable Hautreaktion verursacht oder nicht,
e.des Verwendens der oxidativen Haarfärbekomponente zum Färben des Haars der Person, sofern von der oxidativen Haarfärbekomponente keine inakzeptable Haarreaktion verursacht wurde,
umfassen, wobei das Verfahren die Schritte des
I) Bereitstellens der oxidativen Haarfärbekomponente im biegsamen Beutel (10) umfasst, wobei der biegsame Beutel (10) eine Laminatstruktur (44) zur Aufnahme der oxidativen Haarfärbekomponente aufweist und der Beutel (10) Folgendes umfasst:
- ein Reservoir (12) mit einem Innenvolumen (13) zur Aufnahme der oxidativen Haarfärbekomponente mit einer Reservoirhöhe (38) und einer Reservoirbreite (24),
- einen Ausgießer (14), der sich in Fluidkommunikation mit dem Innenvolumen (13) befindet und ein Abgabeende (16) zur Abgabe der oxidativen Haarfärbekomponente aufweist,
- wobei der Ausgießer (14) von einer Oberseite (20) des Reservoirs (12) hervorragt und eine längliche Form mit einer Breite (22) aufweist, die kleiner als die Breite (24) des Reservoirs (12) ist,
- eine entfernbare Aufreißlasche (18) am Abgabeende (16), wobei die Lasche (18) den Beutel (10) vor dem Öffnen des Beutels (10) verschließt,
- wobei der Ausgießer (14) ein Wiederverschlusselement (48) zum Wiederverschließen des Abgabeendes (16) nach dem Entfernen der Aufreißlasche (18) umfasst, wobei das Wiederverschlusselement (48) die Fähigkeit zum Wiederverschließen durch das Falten eines Teils des Ausgießers (14) auf sich selbst bereitstellt und das Wiederverschlusselement (48) den Ausgießer (14) im Wesentlichen in der gefalteten Position hält, indem es entweder eine Steifigkeit aufweist, die größer als die Steifigkeit der Laminatstruktur (44) ist, oder durch mechanische Schnapp- und Versiegelungsmittel oder durch mechanische Klettverschlussmittel, und wobei das Wiederverschlusselement (48) dadurch eine vorzeitige Oxidation der oxidativen Haarfärbekomponente im Beutel nach dem Öffnen reduziert oder verhindert, wobei der Ausgießer (14) auf sich selbst zu einer Wiederverschlussposition gefaltet wird, wie sie bereits vor dem Öffnen des Beutels (10) bereitgestellt war,
II) Entfaltens des Wiederverschlusselements (48) von der gefalteten Wiederverschlussposition zu einer gestreckten Position zum Öffnen und Entnehmen der Menge der oxidativen Haarfärbekomponente aus dem Beutel (10), wodurch eine auf Erfahrung beruhende Anleitung hinsichtlich der Wiederverschlussposition des Beutels geboten und dadurch die Einhaltung des Erfordernis des Wiederverschließens erhöht wird, wobei die Expositionszeit mindestens so lang wie die empfohlene Gebrauchszeit der oxidativen Haarfärbekomponente ist.

2. Verfahren nach Anspruch 1 mit einem dritten anschließenden Schritt des
III) Wiederverschließens des Beutels mit dem Wiederverschlusselement durch Falten auf sich selbst zu einer Wiederverschlussposition, wie sie vor dem Öffnen des Beutels bereitgestellt war.

3. Verfahren nach einem der vorhergehenden Ansprüche,
wobei das Wiederverschlusselement (48) einen Metallstreifen, Kunststoffstreifen, ein Band und/oder eine zusätzliche starre Schicht, die an der Laminatstruktur angebracht oder darin eingeführt ist, vorzugsweise ein Drahtband (52) umfasst.

4. Verfahren nach Anspruch 1 oder 2,
wobei die Expositionszeit mindestens 10 Minuten, vorzugsweise mindestens 20 Minuten, noch mehr bevorzugt mindestens 30 Minuten beträgt.

5. Verfahren nach einem der vorhergehenden Ansprüche,
wobei die Reaktionszeit mindestens 12 Stunden, vorzugsweise mindestens 18 Stunden, noch mehr bevorzugt mindestens 24 Stunden beträgt.

6. Verfahren nach einem der vorhergehenden Ansprüche,
wobei die kleinere Menge der oxidativen Haarfärbekomponente weniger als 20 Gew.-%, vorzugsweise weniger als 10 Gew.-%, noch mehr bevorzugt weniger als 7,5 Gew.-% und am meisten bevorzugt 5 Gew.-% oder weniger der Gesamtmenge der oxidativen Haarfärbekomponente im Beutel vor dem Öffnen des Beutels beträgt.

7. Verfahren nach einem der vorhergehenden Ansprüche,
wobei der Ausgießer (14) mit dem Reservoir (12) integral gebildet ist.

8. Verfahren nach einem der vorhergehenden Ansprüche,
wobei die Aufreißlasche (18) mit dem Ausgießer (14) integral gebildet ist.

9. Verfahren nach einem der vorhergehenden Ansprüche,
wobei der biegsame Beutel (10) eine vordefinierte Reißlinie (28) zwischen der Aufreißlasche (18) und dem Abgabeende (16) des Ausgießers (14) umfasst, entlang welcher die Aufreißlasche (18) aufgerissen wird, wenn der Beutel (10) geöffnet wird, wobei die Aufreißlasche vorzugsweise vollständig vom Beutel abgerissen wird.

10. Verfahren nach einem der vorhergehenden Ansprüche,
wobei der Ausgießer (14) an seinem inneren Umfang (62) mindestens einen Durchflussbegrenzer (60) zum Begrenzen des Flusses der Haarfärbekomponente bei deren Abgabe umfasst.

11. Verfahren nach Anspruch 9,
wobei der mindestens eine Durchflussbegrenzer (60) als Wölbung (64) gebildet ist, die in das Innere des Ausgießers (14) hervorragt.

12. Verfahren nach einem der vorhergehenden Ansprüche,
wobei die Reservoirbreite 40 % bis 60 %, mehr bevorzugt 47 % bis 53 % der Reservoirhöhe beträgt.

13. Verfahren nach einem der
vorhergehenden Ansprüche, wobei
die Reservoirhöhe zwischen 110 mm
und 160 mm beträgt.

14. Verfahren nach einem der vorhergehenden Ansprüche,
wobei die Reservoirbreite zwischen 45 mm und 60 mm, vorzugsweise zwischen 50 mm und 54 mm beträgt.

15. Verfahren nach einem der vorhergehenden Ansprüche,
wobei die Breite des Ausgießers (14) 50 % oder weniger, vorzugsweise 40 % oder weniger, noch mehr bevorzugt 30 % oder weniger der Breite des Reservoirs (12) beträgt.

## Revendications

1. Procédé de maintien de la réactivité chimique d'un composant de colorant capillaire oxydatif tout en étant stocké dans un sachet flexible ouvert (10) en augmentant la conformité de l'utilisateur avec l'étape de refermeture d'un régime d'utilisation dudit composant de colorant capillaire oxydatif, ledit régime comprenant les étapes de
a. l'évaluation de l'aptitude à utiliser ledit composant de colorant capillaire oxydatif pour teindre les cheveux d'une personne sans provoquer une réaction cutanée inacceptable en ouvrant ledit sachet flexible et en extrayant une quantité mineure dudit composant de colorant capillaire oxydatif du sachet flexible ouvert pour appliquer ladite quantité mineure de composant de colorant capillaire oxydatif à la peau de ladite personne,
b. la fermeture dudit sachet afin d'empêcher la réaction à l'oxydation dudit composant de colorant capillaire oxydatif en raison d'une exposition à l'oxygène d'air par l'intermédiaire de ladite ouverture,
c. le fait de laisser ledit composant de colorant capillaire oxydatif de rester sur ladite peau de ladite personne pour une quantité prédéterminée de temps d'exposition et l'élimination du composant de colorant capillaire oxydatif de ladite peau,
d. après un temps de réaction prédéterminé qui inspecte visuellement la peau de ladite personne où ledit composant de colorant capillaire oxydatif a été appliqué et la décision si ledit composant de colorant capillaire oxydatif provoque ou non une réaction cutanée inacceptable
e. à l'aide dudit composant de colorant capillaire oxydatif pour teindre les cheveux de ladite personne, à condition qu'aucune réaction cutanée inacceptable n'ait été provoquée par ledit composant de colorant capillaire oxydatif,
ledit procédé comprenant les étapes de
I) fourniture dudit composant de colorant capillaire oxydatif dans ledit sachet flexible (10), ledit sachet flexible (10) ayant une structure stratifiée (44) pour stocker ledit composant de colorant capillaire oxydatif et ledit sachet (10) comprenant :
- un réservoir (12) avec un volume interne (13) pour le stockage dudit composant de colorant capillaire oxydatif, ayant une hauteur du réservoir (38) et une largeur du réservoir (24),
- un bec verseur (14) en communication fluidique avec le volume interne (13) et ayant une extrémité de distribution (16) pour la distribution dudit composant de colorant capillaire oxydatif,
- le bec verseur (14) projetant d'un côté supérieur (20) du réservoir (12) et ayant une forme allongée avec une largeur (22) étant plus petite que la largeur (24) du réservoir (12),
- une languette de déchirure amovible (18) à l'extrémité de distribution (16), ladite languette (18) ayant scellé le sachet (10) avant l'ouverture dudit sachet (10),
- le bec verseur (14) comprend un élément de refermeture (48) pour la refermeture de l'extrémité de distribution (16) une fois que la languette de déchirure (18) a été retirée, l'élément de refermeture (48) permet d'effectuer la refermeture en pliant une partie dudit bec verseur (14) sur lui-même et ledit élément de refermeture (48) maintient essentiellement ledit bec verseur plié (14) dans ladite position pliée soit en ayant une rigidité supérieure à la rigidité de la structure stratifiée (44) soit par un accrochage mécanique et des moyens de scellage ou par un crochet mécanique et des moyens en boucle et l'élément de refermeture (48) réduisant ainsi ou empêchant l'oxydation prématurée dudit composant de colorant capillaire oxydatif dans ledit sachet après ouverture, ledit bec verseur (14) étant plié sur lui-même dans une position refermée déjà fournie avant l'ouverture dudit sachet (10),
II) le dépliage dudit élément de refermeture (48) de ladite position de refermeture pliée en une position étendue pour l'ouverture et l'extraction de ladite quantité dudit composant de colorant capillaire oxydatif dudit sachet (10), fournissant ainsi des directives d'expérimentation sur la position de refermeture dudit sachet et augmentant ainsi la conformité avec l'exigence de refermeture, dans lequel ledit temps d'exposition est au moins aussi long que le temps d'utilisation recommandé dudit composant de colorant capillaire oxydatif.

2. Procédé selon la revendication 1, ayant une troisième étape ultérieure
III) la refermeture dudit sachet avec l'élément de refermeture en le pliant sur lui-même en position refermée comme il a été fourni avant d'ouvrir ledit sachet.

3. Procédé selon l'une quelconque revendication précédente,
dans lequel l'élément de refermeture (48) comprend une bande métallique, une bande en plastique, une bande et/ou une couche rigide supplémentaire fixée ou insérée dans la structure stratifiée, de préférence une attache de câble (52).

4. Procédé selon la revendication 1 ou 2,
dans lequel ledit temps d'exposition est d'au moins 10 minutes de préférence au moins 20 minutes, plus de préférence au moins 30 minutes.

5. Procédé selon l'une quelconque revendication précédente,
dans lequel le temps de réaction est d'au moins 12 heures, de préférence au moins 18 heures, plus de préférence au moins 24 heures.

6. Procédé selon l'une quelconque revendication précédente,
dans lequel la quantité mineure dudit colorant capillaire oxydatif est inférieure à 20 %, de préférence inférieure à 10 %, plus de préférence inférieure à 7,5 % et encore plus de préférence à 5 % ou moins en poids de la quantité totale dudit composant de colorant capillaire oxydatif dans ledit sachet avant d'ouvrir ledit sachet.

7. Procédé selon l'une quelconque revendication précédente
dans lequel le bec verseur (14) est formé d'un seul tenant avec le réservoir (12).

8. Procédé selon l'une quelconque revendication précédente
dans lequel la languette de déchirure (18) est formée d'un seul tenant avec le bec verseur (14).

9. Procédé selon l'une quelconque revendication précédente
dans lequel le sachet flexible (10) comprend une ligne de déchirure prédéfinie (28) entre la languette de déchirure (18) et l'extrémité de distribution (16) du bec verseur (14) le long duquel la languette de déchirure (18) est déchirée lorsque le sachet (10) s'ouvre, de préférence la languette de déchirure est complètement arrachée dudit sachet.

10. Procédé selon l'une quelconque revendication précédente,
dans lequel le bec verseur (14) comprend à son périmètre intérieur (62) au moins un limiteur de débit (60) pour restreindre le flux dudit composant de colorant capillaire lorsqu'il distribue.

11. Procédé selon la revendication 9,
dans lequel l'au moins un réducteur de débit (60) est formé comme une saillie (64) projetée à l'intérieur du bec verseur (14).

12. Procédé selon l'une quelconque revendication
précédente,
dans lequel la largeur du réservoir est de 40 % à 60 %, plus de préférence de 47 % à 53 % de la hauteur du réservoir.

13. Procédé selon l'une quelconque
revendication précédente, dans
lequel la hauteur du réservoir
est comprise entre 110 et 160 mm.

14. Procédé selon l'une quelconque revendication
précédente,
dans lequel la largeur du réservoir est comprise entre 45 et 60 mm, de préférence entre 50 et 54 mm.

15. Procédé selon l'une quelconque revendication
précédente,
dans lequel la largeur dudit bec versant (14) est de 50 % ou moins, de préférence 40 % ou moins, plus de préférence 30 % ou moins de la largeur dudit réservoir (12) .
